# EUROPEAN PATENT APPLICATION

(11) **EP 4 310 455 A1**
(43) Date of publication of application: **24.01.2024**
(21) Application number: 23178548.6
(22) Date of filing: 09.06.2023
(51) Int. Cl.: G01D 3/08

(54) **SENSOR SYSTEM WITH FAILURE DETECTION**

(71) Applicant: Melexis Technologies NV, 3980 Tessenderlo (BE)
(72) Inventor: VERGAUWEN, Johan, 3980 Tessenderlo (BE)
(74) Representative: Winger

(57) **Abstract**

A sensor system (100) for measuring a physical parameter, the sensor system (100) comprising one or more sensors (110), a read-out circuit (140), and a comparator (120). The one or more sensors (110) are configured for measuring the physical parameter resulting in a sensor signal on the output terminal of each of the one or more sensors. The read-out circuit (140) is connectable with the output terminal of each sensor and is configured for generating an output signal per sensor which is a measure of the physical parameter. The sensor system (100) is configured such that at least one of the one or more sensors (110) operate at different operating points. The comparator (120) is configured for comparing one or more output signals at different operating points to detect a failure of the sensor system (100).

## Description

### Field of the invention

The invention relates to the field of sensor systems. More specifically it relates to a sensor system which is configured such that it can determine a failure in the sensor system.

### Background of the invention

In safety critical environments, such as automotive applications, it is of utmost important that failures in the sensor system can be determined.

For safety reasons 2 or more sensors are often used to measure the same physical input. The output signal (typically after signal conditioning) is compared. If the output signals indicate the same value for the physical input, then this measurement value can be trusted. If 3 sensors are used and 2 indicate the same value, then the 2 equal measurement values can be further used, while the 3^{rd} value can be discarded.

For simplicity and cost reasons, often identical sensors are used. But this increases the probability that they have a common cause issue. There could be a design weakness in the sensor design. A process defect during sensor fabrication could cause a deviation or failure on both sensors. Both sensors could be disturbed in similar way by external events like electromagnetic interference (EMI). Both sensors could have the same drift over lifetime.

There could also be an issue with the read-out circuitry. If there is only 1 read-out circuitry that is multiplexed between the different sensors, then the same fault in the read-out circuitry will impact the sensor signals in the same way. Even if the read-out circuitry is duplicated, they both may suffer from the same issue.

Furthermore, there could be cross-coupling between the different sensors resulting in a similar, but wrong, output signal.

Common failures between the different output signals are difficult to determine because they result in a similar, but wrong, output signal. There is, therefore, a need for sensor systems which are configured such that they can also determine failures which are common for different sensor outputs.

### Summary of the invention

It is an object of embodiments of the present invention to provide a sensor system which can detect failures which are common to different output signals.

The above objective is accomplished by a method and device according to the present invention.

Embodiments of the present invention relate to a sensor system for measuring a physical parameter. The sensor system comprises one or more sensors, a read-out circuit, and a comparator.

Each of the one or more sensors comprises an output terminal and is configured for producing a sensor signal on the output terminal. The sensor signal of each of the one or more sensors is a measure of the physical parameter and is dependent on the operating point of the sensor.

The read-out circuit is connectable with the output terminal of each of the one or more sensors and is configured for generating an output signal from the sensor signal.

In case of one single sensor, the single sensor is configured to operate at different operating points. In case of more than one sensor, at least two of the plurality of sensors are configured to operate at different operating points.

The comparator is configured for comparing the one or more output signals at the different operating points to detect a failure of the sensor system.

It is an advantage of embodiments of the present invention that common cause issues between the one or more sensors can be detected by a sensor system in accordance with embodiments of the present invention.

In embodiments of the present invention the sensor system comprises a control device which is configured for controlling the operation point of the one or more sensors.

In embodiments of the present invention the control device is configured for controlling the operation point of the one or more sensors in an electrical way.

In embodiments of the present invention the sensor system comprises exactly one sensor and the control device is configured to change the operation point of the sensor at different moments in time and the comparator is configured to compare the output signals available at the different moments in time.

In embodiments of the present invention the sensor system comprises two or more sensors. These sensors may be identical.

In embodiments of the present invention the different operating points of the sensors are obtained by differences in position or movement of the sensors.

In embodiments of the present invention the different operating points of the sensors are obtained by differences in temperature of the sensors.

In embodiments of the present invention the output signal is defined in function of the operation point for one or more parameters selected from the list of offset, sensitivity, linearity, bandwidth, lifetime drift.

In embodiments of the present invention the read-out circuit is configured for conditioning the sensor signals to obtain the output signals.

In embodiments of the present invention the one or more sensors are pressure sensors.

In embodiments of the present invention the one or more sensors are Hall sensors. The Hall sensors may be configured for measuring a magnetic field from a magnet, they may be positioned at a different distance from the magnet.

In embodiments of the present invention the one or more sensors are comprising one or more sensing elements. The sensing element may for example be a sensing resistor or a sensing capacitor.

In embodiments of the present invention the sensors are arranged in bridge or half bridge configuration.

In embodiments of the present invention the control device is configured for changing the current through one or more sensors or the voltage over the one or more sensors.

Particular and preferred aspects of the invention are set out in the accompanying independent and dependent claims. Features from the dependent claims may be combined with features of the independent claims and with features of other dependent claims as appropriate and not merely as explicitly set out in the claims.

These and other aspects of the invention will be apparent from and elucidated with reference to the embodiment(s) described hereinafter.

### Brief description of the drawings

FIG. 1 shows a schematic block diagram of a sensor system in accordance with an exemplary embodiment of the present invention.
FIG. 2 shows a schematic block diagram of a sensor system, wherein the control device is configured for controlling the operation point of the one or more sensors by controlling the current through the sensors.
FIG. 3 shows the same sensor system as in FIG. 2 but with a short-circuit between output terminals of two sensors which are connected with positive terminals of differential amplifiers.
FIG. 4 shows the same sensor system as in FIG. 2 but with a short-circuit between output terminals of two sensors of which one is connected with a positive terminal of one differential amplifier and another one is connected with a negative terminal of the other differential amplifier of the two sensors.

Any reference signs in the claims shall not be construed as limiting the scope. In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly, it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

Embodiments of the present invention relate to a sensor system 100 for measuring a physical parameter.

The sensor system 100 comprises one or more sensors 110, a read-out circuit 140, and a comparator 120 for comparing the outputs of the one or more sensors. Each of the one or more sensors 110 comprises an output terminal and is configured for producing a sensor signal to the output terminal wherein the sensor signal is a measure of the same physical parameter and is dependent on an operating point of the sensor. The read-out circuit 140 is connected with the output terminal of each of the one or more sensors and is configured for generating an output signal from the sensor signal.

In case of one sensor, the single sensor 110 is configured to operate at different operating points. In case of more than one sensor, at least two of the plurality of sensors 110 is configured to operate at different operating points. A first one may for example be operating at a first operating point and a second one may for example be operating at a second operating point different from the first operating point. In case of for example 3 sensors, all sensors may work at a different operating point or two may work at a different operating point and one may work at the same operating point as one of the other two.

It is thereby noted that the output signal is dependent on the operating point.

The comparator 120 is configured for comparing the one or more output signals at the different operating points to detect a failure of the sensor system 100. In case of a single sensor the output signal generated from the sensor signal at a first operating point is compared with the output signal generated from the sensor signal at a second operating point different from the first operating point. In case of multiple sensors, the output signals of at least two sensors at different operating points are compared.

The read-out circuit 140 may be configured for pre-processing the sensor signal(s). Pre-processing may for example comprise amplification and/or filtering or any other type of signal conditioning to obtain the output signals. Part of the pre-processing may also be done in the digital domain. In embodiments of the present invention the read-out circuit may comprise an Analog-to-Digital Converter (ADC) for digitizing the sensor signal(s) which are possibly preprocessed before being digitized. In case the output signals of the read-out circuit are digital output signals, the comparator is a digital comparator. The comparator may for example be part of a controller (e.g. an engine control unit).

In embodiments of the present invention the sensor system may comprise exactly two sensors.

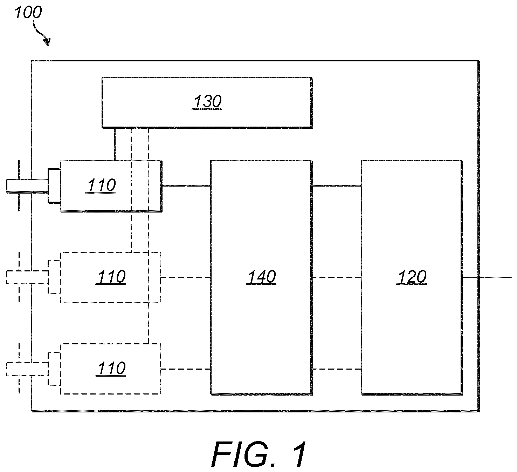

FIG. 1 shows a schematic block diagram of a sensor system 100 in accordance with an exemplary embodiment of the present invention. In this system the sensor system comprises a control device 130 which is configured for controlling the operation point of the one or more sensors.

In embodiments of the present invention the control device 130 is configured for controlling the operation point of the one or more sensors 110 in an electrical way. This may for example be obtained by biasing the sensor with a specific voltage or by applying a specific current through the sensor.

In the exemplary embodiment illustrated in FIG. 1 the lines between the control device 130 and the sensors 110 represent that the control device 130 controls the operating point of the sensors 110.

In the exemplary embodiment illustrated in FIG. 1 two of the sensors are drawn with dashed lines. These sensors, if present, create redundancy. They are, however, not strictly required and therefore are drawn with dashed lines. A sensor system 100 in accordance with embodiments of the present invention can also be used in a single sensor system. In that case the control device 130 is configured to change the operation point of the sensor at different moments in time and the comparator is configured for comparing the output signal at the different operating points at the different moments in time. Also, in a sensor system which comprises a plurality of sensors, the control device 130 may be configured to change the operation point of the sensors at different moments in time.

Each of the single or the plurality of sensors comprises an output terminal and is configured for producing a sensor signal to the output terminal. The sensor signal is a measure of the physical parameter and is dependent on an operating point of the sensor. The read-out circuit 140 is connected with the output terminal of each sensor and generates an output signal from each sensor signal.

The read-out circuit is connected to the comparator 120 such that the comparator can receive the output signals.

In embodiments of the present invention the read-out circuit may comprise one single read-out circuitry (e.g. amplifier + ADC) which is multiplexed between the different sensors.

Alternatively, there may be separate read-out circuitry (e.g. amplifier + ADC) per sensor.

Also, hybrid combinations wherein part of the read-out circuitry is multiplexed between some sensors and part of the read-out circuitry is fixed to a single sensor are possible. There may for example be a dedicated amplifier per sensor and an ADC shared by all sensors.

In embodiments of the present invention the sensors not necessarily are continuously powered. They may for example only be powered when a sensor signal is monitored by the read-out circuit.

In embodiments of the present invention the sensor signal is dependent on the operating point. The difference in sensor operating point may for example result in a difference in the span of the sensor signal.

In embodiments of the present invention which are comprising more than one sensor each sensor may have a different operating point. To maintain a specific operating point regulation may be required.

The sensors 110 may be resistive sensors, capacitive sensors, inductive sensors. They may be micro electro-mechanical system sensors. The sensors may be implemented on a substrate. All sensors may be implemented on the same substrate or they may use a different substrate. In embodiments of the present invention the sensors 110 may share the substrate with the read-out circuitry 140 and the comparator 120. The sensors 110 as well as the readout circuitry 140 and the comparator 120 may be implemented on the same die.

In embodiments of the present invention the sensors 110 each sensor may comprise one or more sensing elements. Such a sensing element may for example be a sensing resistor or a sensing capacitor. In case of more than one sensing element, the sensing elements may be arranged in a bridge of half bridge configuration. The sensing elements may for example be configured as Wheatstone bridges. A difference in operating point of a sensor can be obtained by providing a different supply voltage or a different supply current resulting in a different common mode voltage of the bridge output, and in a difference of signal span (the differential voltage of the bridge output) of the sensor signal on the output terminal of the sensor.

If a sensor is configured as a half bridge with two resistors connected to ground and if it is biased by 2 current sources on top, then the magnitude of these bias currents can be changed to change the common mode voltage and the differential voltage of the sensor signals. If the sensor resistors are not only dependent on the physical parameter to be measured (e.g. pressure), but also on e.g. temperature, then the common mode voltage and differential voltage of the sensor will also change over temperature.

In embodiments of the present invention the common mode may be regulated within a wanted sensor specific range.

In embodiments of the present invention the common mode voltage may be regulated to a specific range for one sensor, while the operating point of the other sensor is varying over temperature.

In embodiments of the present invention the sensor system may be configured such that one sensor operates at a fixed operating point (e.g. a fixed common mode voltage), while the other sensor is operating at different operating points (e.g. multiple common mode voltages). Readout circuitry 140 routes the sensor signal of each sensor to the comparator 120. Additionally, the readout circuitry 140 may be configured for conditioning the sensor signal of each sensor, thereby obtaining the output signal(s). The comparator 120 is then configured for comparing the output signal(s) at the different operating points with the output signal obtained from the sensor at the fixed operating point. This may be achieved using analog circuitry.

In embodiments of the present invention the operating point of a sensor may be controlled in a non-electric way. The sensors may for example be Hall sensors which are positioned at difference distances of a magnet so that they measure a different magnitude of the magnetic field. In embodiments of the present invention 1 Hall sensor may have a magnetic field concentrator on top, while the other has not or uses another magnitude of field concentration.

Another non-electric way for controlling the operating point of a sensor is by controlling its temperature. Many sensors are temperature dependent, while they are (primarily) not used to sense temperature. In that case the operating point can be made different by using a different temperature. In embodiments of the present invention the different operating points of the sensors 110 are obtained by differences in temperature of the sensors 110. In a sensor system according to embodiments of the present invention this may for example be achieved by having a heater on or near the sensor to put it at a different temperature. The temperature of the sensor could be kept constant. This can be done for all sensors (but using a different temperature) or just for 1 of them. In embodiments of the present invention the sensor system may be configured for forcing a constant temperature difference between 2 sensors.
In embodiments of the present invention the sensor system may be configured for controlling the operating points using different means. In case the sensors are Hall sensors different bias current of the Hall sensors as well as different distances from the magnet to the Hall-sensors may be used. The differences may be selected such that they amplify each in terms of variation of the operating point or such that they partially compensate each other.
The sensor system may also be configured to control the operating point of the sensor in a mechanical way. This may for example be the case for a gyroscope. A gyroscope is typically forced to move in a linear way in order to measure rotations. The amplitude or frequency of this linear vibration can be configured differently for 2 sensors. This is in principle a mechanical way to change the operating point. But the movement is usually generated by electro-static forces, so it is in the end generated in an electrical way.

In embodiments of the present invention during normal operation of the sensor system the output signal is dependent on the operating point in accordance with a predetermined characteristic. This predetermined characteristic may be defined for one or more parameters selected from the list of: offset, sensitivity, linearity, bandwidth, lifetime drift.

A failure in the sensor system which is common to the one or more sensors will result in a change of the predetermined characteristic for each sensor. As the operation points are different during normal operation of the sensors, during normal operation the outputs of the sensors have a different behavior depending on the operating points on the predetermined characteristic. This difference in behavior will change when a common cause failure is present in the signal chains of the sensors. The comparator 120 is configured for comparing the output signals given by the different operating points. The output signals may be compared after optional signal conditioning.

Different failures may be detected using a sensor system in accordance with embodiments of the present invention. In the paragraphs below some of these failures are discussed by way of illustration. The invention is, however, not limited thereto. Also other failures may be detected.

If a large disturbance (e.g. caused by EMI) is coupled to a sensor, then the resulting sensor signal may go outside the normal operating range of the sensor 110 or the read-out circuitry 140. This may lead to big non-linearity errors and even clamping of the sensor signal. If different operating points are used, then these effects could happen at a different moment or the effect could be different (e.g. a first sensor operating at a first operating point may clamp at the high side, while a second sensor operating at a second operating point may clamp at the low side). In embodiments of the present invention the comparator may be configured for detecting a failure of the sensor system when the first output signal and the second output signal are clamping, given the predetermined characteristic, that no clamping of the output signal should occur for the first sensor nor for the second sensor at their respective operating points.

The operating point may also have an effect on the lifetime drift of the sensor. The lifetime drift of a sensor is often dependent on the voltage seen by this sensor. By using a different supply (and so a different operating point) a different lifetime drift can be expected. The comparator is in such case configured for taking into account the expected difference in lifetime drift when comparing the output signals of the sensors. In embodiments of the present invention some sensors may be only supplied periodically, causing less drift than for continuously supplied sensors. In some embodiments of the present invention all sensors may be supplied periodically, but with a different duty cycle.

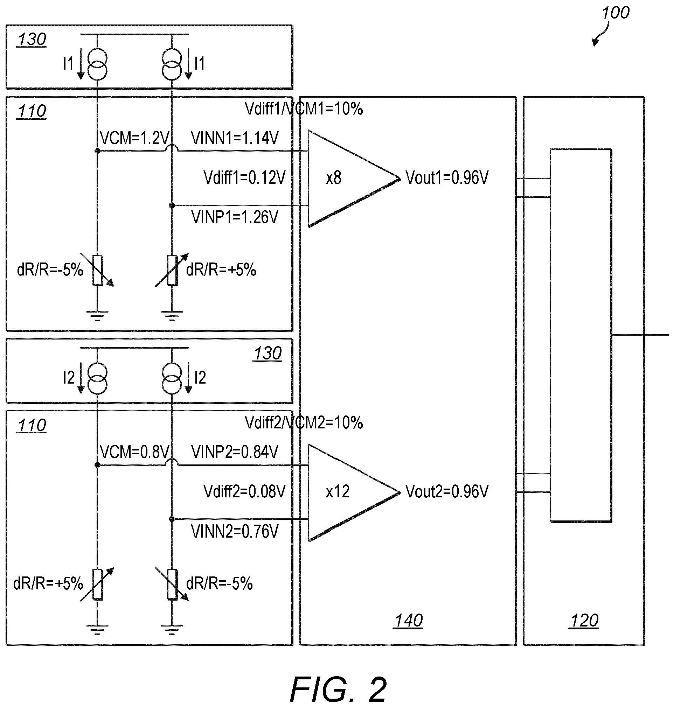

FIG. 2 shows a schematic diagram of an exemplary sensor system 100 in accordance with embodiments of the present invention. The sensor system 100 comprises two sensors 110 and a control device 130 which is configured for controlling the operation point of the two sensors. The output terminals of the sensors 110 are connected to input terminals of the read-out circuit 140 and output terminals of the read-out circuit are connected to input terminals of the comparator 120 which is configured for comparing the output signals of the one or more sensors to detect a failure of the sensor system 100.

In this example each sensor 110 comprises 2 resistors, 1 going up and 1 going down when the sensor physical parameter is increasing. Each resistor of a sensor 110 has a first resistor node connected with a current source of the control device 130 and a second resistor node connected with ground. The voltage difference between the first nodes of the resistors is the output signal. In this example the read-out circuit 140 comprises a differential amplifier. The input nodes of the differential amplifier are connected with the first nodes of the resistors. The comparator 120 is configured for comparing the outputs of the differential amplifiers of the read-out circuit 140.

In embodiments of the present invention the sensors may be identical. This is not necessarily the case. For safety reasons it may even be better to use diverse sensors. Diverse sensors may have the problem of availability, higher cost to develop, additional technical difficulties (e.g. different read-out circuit needed). In case of identical sensors both may for example be resistors (e.g. on a membrane) which both have the same resistance, and the same sensitivity to the physical parameter (e.g. a pressure on a membrane). Both measure the same physical signal. In the exemplary embodiment illustrated in FIG. 2 the operating point of the first sensor can be set by current sources with bias current I1 and the operating point of the second sensor can be set by current sources with bias current 12. Different operating points are obtained by having I1 different from 12. In the exemplary embodiment illustrated in FIG. 2 the bias currents are such that for the first (upper) sensor a common mode voltage of 1.2V is obtained, while for the second (lower) sensor a common mode voltage of 0.8V is obtained. The invention is, however, not limited thereto. Also, other operating points may be selected.

A different operating point of the sensor will result in a different output response of the sensor on the physical parameter. In the exemplary embodiment illustrated in FIG. 2 the difference in common mode voltage will for example change the voltage swing, although the resistors have the same sensitivity. The differential voltage between the first resistor nodes of the resistors of the first sensor is in this example is 0.12V and the differential voltage between the first resistor nodes of the resistors of the second sensor is in this example 0.08V. In this example the ratio between the differential voltage and the common mode voltage can be used to detect a failure of the sensor system. For both sensors the ratio between the differential voltage and the common mode voltage is the same (10%). Additional signal conditioning may be provided by the read-out circuit. The read-out circuit 140 may for example be configured for measuring the sensor signals, being the differential and common mode voltage, and for performing the division between both. Alternatively, the read-out circuit 140 of each sensor can compensate for the difference in voltage swing (due to the difference in operating point) by using a different gain, e.g. a gain of 8 for sensor 1 and a gain of 12 for sensor 2. This conditioning of the sensor signals results in an output voltage of 0.96V for both.

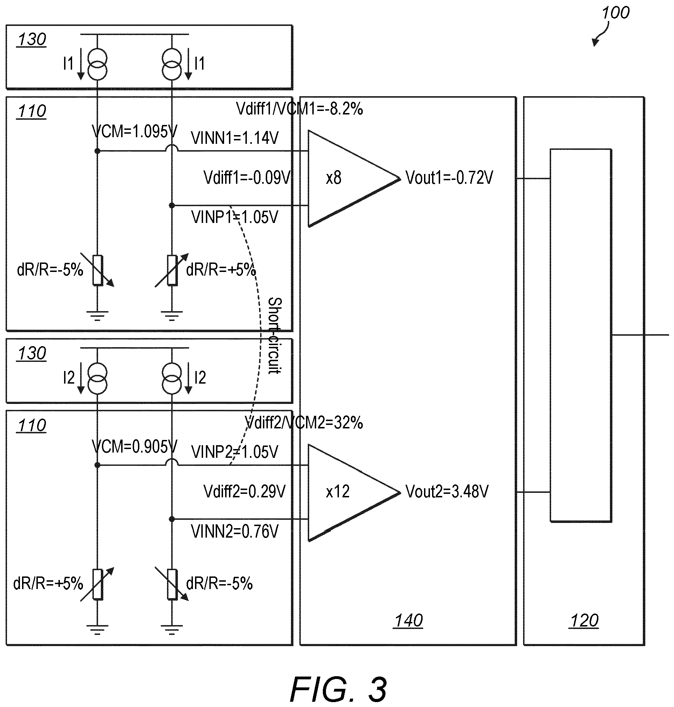

In embodiments of the present invention the comparator 120 is configured to detect a short between 2 sensors. Such a short could be caused by a fault of which the risk may for example be increased because of constraints from the sensor 110 or the read-out circuitry 140 on the position of the components and their interconnections. For example, both sensors may be located on the same diaphragm. As a consequence, a node of the first sensor and a node of the second sensor may be closely together and as a result there exists a realistic risk to have a short circuit between these 2 nodes. It may not be possible to detect this easily. It is an advantage of embodiments of the present invention that it is possible to detect this when we use a different operating point.
This is explained using the schematic drawing in FIG. 3. The drawing is the same as the drawing of FIG. 2, but now the 2 input nodes of the differential amplifiers with positive polarity (INP1 and INP2, both rising when the physical signal is rising) are shorted. The node from the sensor with highest common mode voltage will be pulled down, creating a smaller differential voltage. The differential voltage becomes even negative in this example. The node from the sensor with the lowest common mode voltage will be pulled up, creating a bigger differential voltage. This will result in different ratios (differential versus common mode voltage) and in different output voltages. In embodiments of the present invention the comparator 120 is configured for comparing the ratios and/or for comparing the output voltages of the differential amplifiers to detect a failure of the system (in this example the short between the two input nodes with positive polarity).

The same principle also works for a short of the negative input nodes (INN1 and INN2) of the differential amplifiers. In that case the output of the first differential amplifier will increase and the output of the second differential amplifier will decrease.

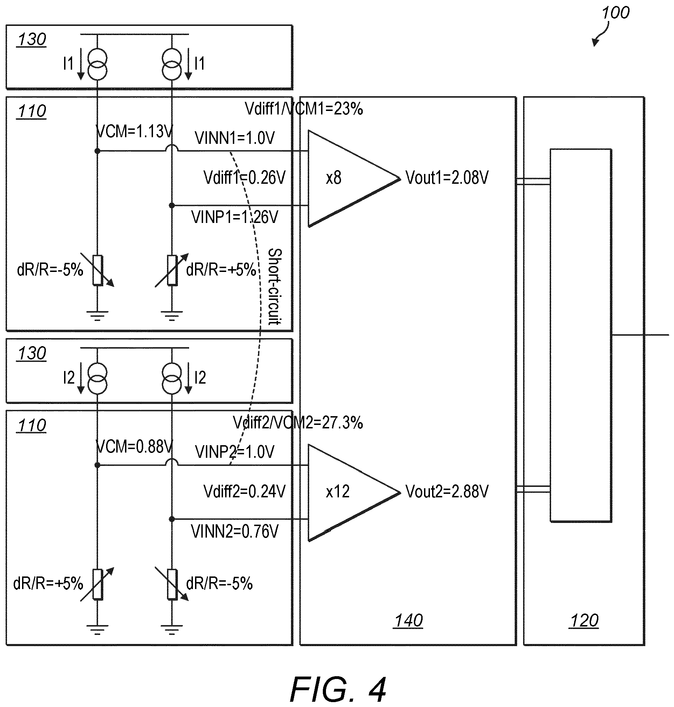

Another failure may be a short between input nodes (e.g. INN1 and INP2) with opposite polarity. An example thereof is illustrated in FIG. 4. In this example the shorted nodes will have a voltage of approximately 1V, creating differential voltages Vdiff1 = 0.26V and Vdiff2 = 0.24V, both bigger than in the faultless case. If the comparator 120 uses the ratio of differential voltage versus common mode voltage, then it results in signals of 23% and 27.3%. The difference is relatively small, but still detectable, although the results are deviating a lot from the faultless 10% result. If the comparator 120 uses different gains to deal with the difference in operating point and voltage swing, then Vout1 = 2.08V and Vout2 = 2.88V, so this difference should be well detectable. In this situation the method of using different gains is favorable, because of the bigger difference caused by the short-circuit.

The present invention is applicable to different types of sensors such as for example pressure sensors, magnetic field sensors, position sensors, speed sensors.

## Claims

1. A sensor system (100) for measuring a physical parameter, the sensor system (100) comprising a single or a plurality of sensors (110), a read-out circuit (140), and a comparator (120),
wherein each of the single or the plurality of sensors (110) comprises an output terminal and is configured for producing a sensor signal to the output terminal, wherein the sensor signal is a measure of the physical parameter and is dependent on an operating point of the sensor, wherein the read-out circuit (140) is connectable with the output terminal of each of the single or the plurality of sensors and is configured for generating an output signal from the sensor signal,
wherein the single sensor (110) is configured to operate at different operating points or wherein at least two of the plurality of sensors (110) are configured to operate at a different operating point,
and
wherein the comparator (120) is configured for comparing the one or more output signals at different operating points to detect a failure of the sensor system (100).

2. A sensor system (100) according to claim 1 wherein the sensor system (100) comprises a control device (130) which is configured for controlling the operation point of the single or the plurality of sensors (110).

3. A sensor system (100) according to claim 2 wherein the control device (130) is configured for controlling the operation point of the single or the plurality of sensors (110) in an electrical way.

4. A sensor system (100) according to any of the claims 2 or 3, wherein the sensor system (100) comprises exactly one sensor (110) and wherein the control device (130) is configured to change the operation point of the sensor (110) at different moments in time and wherein the comparator is configured to compare the output signals available at the different moments in time.

5. A sensor system (100) according to any of the claims 1 to 3, wherein the sensor system (100) comprises two or more sensors (110).

6. A sensor system (100) according to claim 5 wherein the sensors (110) are identical.

7. A sensor system (100) according to claim 5 or 6, wherein the different operating points of the sensors (110) are obtained by differences in position or movement of the sensors (110).

8. A sensor system (100) according to any of the claims 5 to 7, wherein the different operating points of the sensors (110) are obtained by differences in temperature of the sensors (110).

9. A sensor system (100) according to any of the previous claims wherein the output signal is defined in function of the operation point for one or more parameters selected from the list of offset, sensitivity, linearity, bandwidth, lifetime drift.

10. A sensor system (100) according to any of the previous claims wherein the read-out circuit (140) is configured for conditioning one or more of the sensor signals to obtain one or more of the output signals.

11. A sensor system (100) according to any of the previous claims wherein the single or the plurality of sensors (110) are pressure sensors or Hall sensors.

12. A sensor system (100) according to claim 12 as long as dependent on claim 7, wherein the single or the plurality of sensors are Hall sensors and wherein the Hall sensors (110) are configured for measuring a magnetic field from a magnet, wherein the Hall sensors (110) are positioned at a different distance from the magnet.

13. A sensor system (100) according to any of the previous claims wherein the single or the plurality of sensors (110) are comprising one or more sensing elements.

14. A sensor system (100) according to claim 13, the sensor system comprising at least two sensing elements wherein the sensing elements are arranged in bridge or half bridge configuration.

15. A sensor system (100) according to any of the claims 11 to 14 as long as dependent on claim 3 wherein the control device is configured for changing the current through one or more sensors (110) or the voltage over the one or more sensors (110).
